(19) Europäisches Patentamt
European Patent Office
Office européen des brevets

(11) **EP 3 921 817 B1**

(12) **EUROPEAN PATENT SPECIFICATION**

(45) Date of publication and mention
of the grant of the patent:
**29.04.2026 Bulletin 2026/18**

(21) Application number: **20707318.0**

(22) Date of filing: **31.01.2020**

(51) International Patent Classification (IPC):
**G08B 13/00** (2006.01)   **G08B 13/187** (2006.01)
**G08B 13/24** (2006.01)   **G01S 13/56** (2006.01)

(52) Cooperative Patent Classification (CPC):
**G08B 13/00; G01S 7/2925; G01S 13/0209;**
**G01S 13/56; G01S 13/878; G01S 13/886;**
**G08B 13/2491;** G01S 7/415; G08B 21/043

(86) International application number:
**PCT/IB2020/050794**

(87) International publication number:
**WO 2020/161580 (13.08.2020 Gazette 2020/33)**

(54) **SYSTEM AND METHOD FOR DETECTING ONE OR MORE TARGETS LOCATED WITHIN A MONITORING AREA**

SYSTEM UND VERFAHREN ZUR DETEKTION EINES ODER MEHRERER ZIELE IN EINEM ÜBERWACHUNGSBEREICH

SYSTÈME ET PROCÉDÉ DE DÉTECTION D'UNE OU DE PLUSIEURS CIBLES SITUÉES À L'INTÉRIEUR D'UNE ZONE DE SURVEILLANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2019 IT 201900001675**

(43) Date of publication of application:
**15.12.2021 Bulletin 2021/50**

(73) Proprietors:
• **Rampa, Vittorio**
**20097 San Donato Milanese (MI) (IT)**
• **Savazzi, Stefano**
**20133 Milano (IT)**

(72) Inventors:
• **Rampa, Vittorio**
**20097 San Donato Milanese (MI) (IT)**
• **Savazzi, Stefano**
**20133 Milano (IT)**

(74) Representative: **De Gaspari, Andrea**
**De Gaspari Osgnach s.r.l.**
**Via Altinate, 33**
**35121 Padova (IT)**

(56) References cited:
EP-A1- 2 428 814     WO-A1-2017/100706
WO-A1-2017/210770   CN-A- 108 957 399
US-A1- 2018 183 650

• XIAOLONG ZHENG ET AL: "Design and Implementation of a CSI-Based Ubiquitous Smoking Detection System", IEEE /ACM TRANSACTIONS ON NETWORKING, IEEE / ACM, NEW YORK, NY, US, vol. 25, no. 6, 1 December 2017 (2017-12-01), pages 3781 - 3793, XP058385264, ISSN: 1063-6692, DOI: 10.1109/ TNET.2017.2752367
• YONGPAN ZOU ET AL: "Wi-Fi Radar: Recognizing Human Behavior with Commodity Wi-Fi", IEEE COMMUNICATIONS MAGAZINE., vol. 55, no. 10, 1 October 2017 (2017-10-01), US, pages 105 - 111, XP055436343, ISSN: 0163-6804, DOI: 10.1109/MCOM.2017.1700170

**Description**

Field of application of the invention

The present invention concerns the technical sector of the systems for locating one or more elements positioned within a physical space with finite and predetermined dimensions, and more specifically it concerns a system for detecting one or more targets located within a monitored area.

State of the art

In the sector of the systems for locating and assessing the movement of targets (people and/or objects), electronic systems have been known for some time which are respectively suited to detect the presence of one or more targets within a physical space and to assess the movement of said target/targets within said space.

The techniques which are currently most used for detecting and monitoring the position of one or more targets within an environment are based on known wireless electronic technologies such as those based on the use of infrared radiation (IR) or visible radiation, or other technologies based on the propagation of acoustic or ultrasonic waves, and those based, instead, on radio radiation employed for radar localization and for the transmission of information using RFID tag, Bluetooth, Wi-Fi devices and more generally using wireless radio communication protocols.

In the active infrared systems, for example, a transmitting device (or source) is used, which is suited to send out an IR signal for the illumination of the scene that can be associated with a unique identification code.

Said signal is received by a receiving device which, for example, once the specific identification code has been detected, is able to provide information related to the position of the transmitting device. Other IR systems exploit the presence of two or more IR sensors to determine the position of the transmitting device geometrically.

In order to operate correctly, these active systems require the presence of an emitting device and of (at least) one receiving device. Furthermore, this adds to the fact that the infrared radiation is stopped by obstacles such as walls, ceilings etc. but also by the presence of smokes or vapours.

Passive infrared systems, instead, use the IR radiation produced by the target or targets themselves. These systems, however, work when the targets emit IR radiation, for example in the case of a human body.

In video location systems the optical tracking technique is often used, which is obtained by combining the use of infrared cameras and light reflecting elements mounted directly on the object to be located.

The cost for the installation and maintenance of these systems is rather high and, in any case, the stable association of a light reflecting element with the target is necessary, like in the systems described above. Sometimes infrared sources are used which generate patterns recognized by apposite cameras including infrared sensitive elements; even in this case, however, the cost of systems based on said technologies can be high.

In order to overcome these drawbacks, radio detection and tracking systems have been implemented which, for example, use the Bluetooth standard.

In the case at hand, a single device is used as an *access point* and therefore is able to receive the electromagnetic signal emitted by other Bluetooth devices disseminated in the room, so that it is possible to identify its position.

It could be ascertained that these systems are particularly sensitive to the interferences generated by a plurality of radio devices positioned within the environment where the detection process is carried out and, as a result, it is often necessary to limit the number of Bluetooth devices which appear to be active at the same time within said environment with respect to the maximum number admitted by the Bluetooth standard considered.

Other types of detection and tracking systems are based on the use of an active device (tag) associated with the target (or targets) and designed to generate suitable signals, for example acoustic, ultrasonic, radiofrequency (RF) signals intended to be successively received by a set of receivers positioned within the environment where the detection process is carried out.

By exploiting the triangulations of the signals received by the receivers forming the elements of said set, it is possible to determine the instant position of the target or targets in the monitored environment.

However, during the practical implementation of the system it is not always easy to associate a device with each target and the performance of the system can be negatively affected by the presence of obstacles which can alter the propagation of the signals generated by the device associated with the moving object.

A specific type of detection systems of the type described above is based on the use of RFID *tags,* respectively associated with each moving target and with the environment where the target or targets is/are monitored and tracked.

These systems are rather expensive (especially the *tag reader* devices) and furthermore it is not always easy or possible to operatively (and physically) associate a RFID tag with the target.

In recent times, the systems for detecting and tracking a target have evolved even further from a technical point of view, said evolution aiming to use the wireless signals present both indoors and outdoors as a survey instrument.

In these systems, the radio signal generated, for example, by a wireless *access point* device can thus be used for a double purpose: to connect one or more electronic devices *(computers, tablets, smart phones etc.)* to the local LAN and to allow one or more targets to be monitored through the transmission, propagation and reception of said radio signal within the area where the detection process is carried out. These systems, furthermore, are of the passive type, meaning tag-free.

The relative inexpensiveness of these pieces of equipment and the absence of specific devices associated with the target (or targets) constitute the main advantages of this type of detection and tracking systems compared to the cases previously described.

For example, the document WO 2017/210770 discloses a system and a method for the intelligent identification of an intruder within a monitored area.

By means of this system it is possible to monitor and detect any authorized (and unauthorized) access by a subject or target to a residential or industrial unit provided with a wireless network. The system comprises also an algorithm designed to verify the presence of a valid authorization associated with the target present within the monitored area, in order to activate a sequence of activities suited to generate an alarm in the case where this authorization has not been previously stored in the system.

Operatively, the system comprises a plurality of electronic devices associated with the monitored area, which are designed to transmit and receive signals according to the known wireless standards, and a processing unit capable of extracting the information related to the position/movement of a target through the processing of the wireless signal distorted by the target and received by the devices placed within the monitored space.

The main drawback related to this solution is due to the fact that the system described above provides excellent results when it is necessary to locate a target (that is, its presence) within the monitored area, while the information associated with the movement and position of said target within the monitored area is not equally accurate.

More specifically, it could be experimentally observed that the simple reception of a normal wireless signal by an electronic device is not sufficient to guarantee a high degree of precision in the assessment of the target's trajectory during its movement within the monitored area.

A further limitation of this type of systems lies in that, due to their high level of imprecision, it is not possible to distinguish the type of movement performed by the target within the monitored area (for example, continuous, in successive sections etc).

This type of information is important when the detection systems are configured to assess also the type of activity performed by that specific target (in general, a person or a living being) located within the monitored area.

Consequently, the systems described above feature reduced flexibility of use, since their use is mainly limited only to applications related to security and/or intrusion prevention.

A further limitation of the known systems described above lies in that they cannot be easily adapted to the dynamic changes in the configuration of the space in which they are installed.

This rigidity is mainly shown by the limited ability to separate the different contributions produced on the electromagnetic signal transmitted and received by the antennas of the devices. These contributions are, on the one hand, caused by the presence and the movement of the target within the monitored environment and, on the other hand, due to the monitored environment and to the fact that the latter can be subjected to modifications over time.

A relevan document of the prior art is XIAOLONG ZHENG ET AL: "Design and Implementation of a CSI-Based Ubiquitous Smoking Detection System",IEEE /ACM TRANSACTIONS ON NETWORKING, IEEE / ACM, NEW YORK, NY, US, vol. 25, no. 6, 1 December 2017 (2017-12-01), pages 3781-3793, XP058385264,ISSN: 1063-6692, DOI: 10.1109/ TNET.2017.2752367.

Presentation of the invention

The present invention intends to overcome the drawbacks mentioned above by providing a system for detecting one or more targets within a monitored area or space.

More specifically, the main object of the present invention is to provide a system for detecting one or more targets within a monitored area which makes it possible to establish the position of the target with high precision even when the latter is moving.

A further object of the present invention is to provide a system for detecting one or more targets within a monitored area which is easy to construct and makes it possible to use a wireless signal for the transmission of data whose standard is commonly used for both civil and industrial applications.

Another object of the present invention is to provide a system for detecting one or more targets within a monitored area in which it is not necessary to associate a device or piece of equipment with the target which, therefore, is completely passive with respect to the detection system.

A further object of the present invention is to provide a system for detecting one or more targets within a monitored area which makes it possible to detect the type of movement associated with the target (or targets) over time, in such a way to provide also information related to the type of activity performed by the latter during the same time interval.

Therefore, it is another object of the present invention is to provide a system for detecting one or more targets within a monitored area which is extremely flexible and thus can be used in various fields of application such as, for example, in the so-called smart homes, in position detection systems, civil or industrial automation systems, intrusion prevention systems, fall detection systems.

These objects are achieved by a system for detecting one or more targets within a monitored area according to claim 1.

Other objects which are described in greater detail below are achieved by a system for detecting one or more targets positioned within a monitored area according to the dependent claims from 2 to 13.

Brief description of the drawings

The advantages and characteristics of the present invention will clearly emerge from the following detailed description of some preferred but non-limiting configurations of a system for detecting one or more targets positioned within a monitored area, with particular reference to the following drawings:

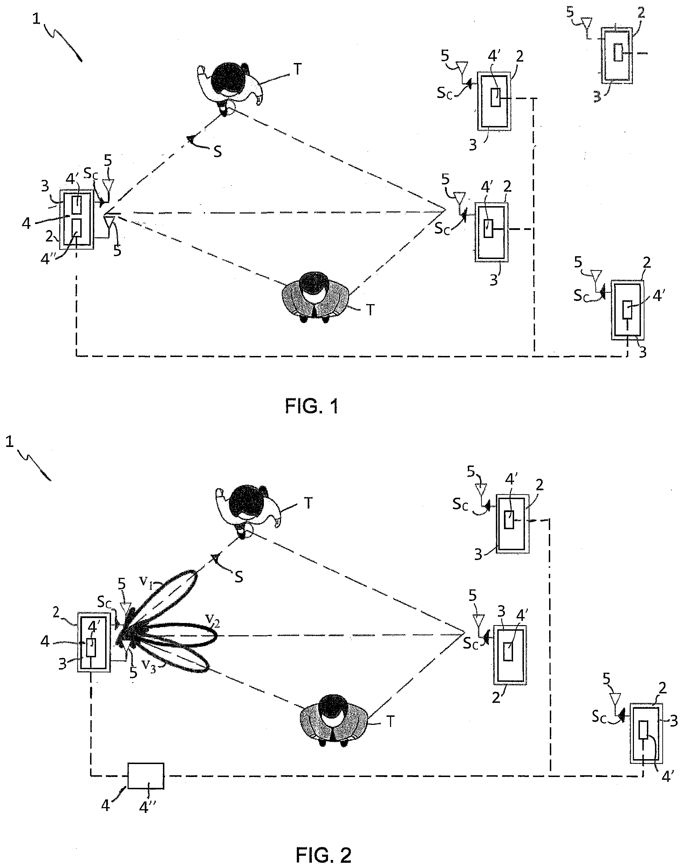

- **Figure 1** and **Figure 2** schematically show two configurations of a system for detecting one or more targets positioned within a monitored area, according to the invention;
- **Figure 3** and **Figure 4** show a schematic view of the system illustrated in Figures 1 and 2, in which it is possible to observe three distinct wave modes associated with the transmitting/receiving radio modules;
- **Figure 5** shows three different radiation patterns associated with the wave modes emitted by the same antenna used in the system illustrated in Figure 1 or in Figure 2;
- **Figure 6** shows a further operating diagram of a system according to the invention in a first operating configuration;
- **Figures from 7A** to **7C** schematically illustrate the operation of the system of Figure 1 in a second operating configuration, and the same figures show also the trend over time of the power measures in dBm (decibel relative to the reference power of 1 mW) of the electromagnetic signals, associated with two respective wave modes received by the radio module, measured at adjacent frequency bands (subcarriers);

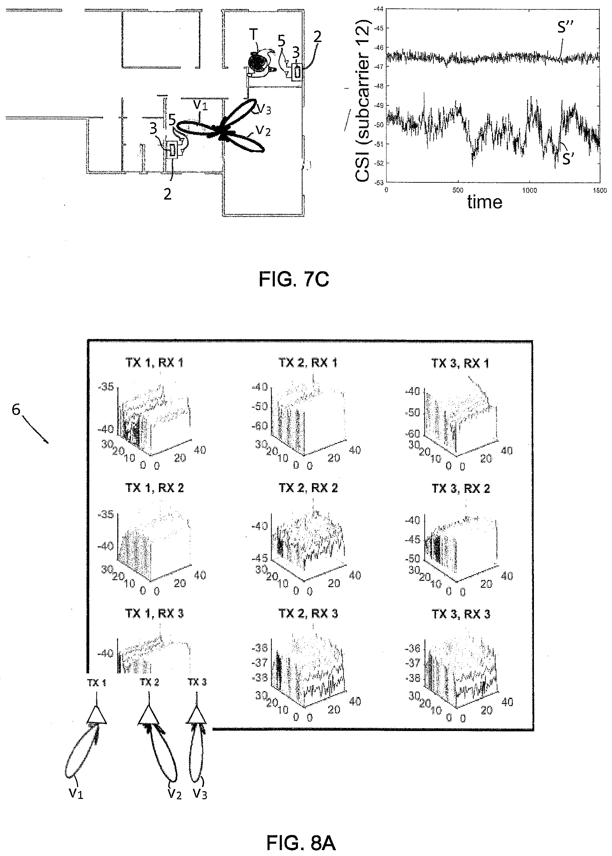

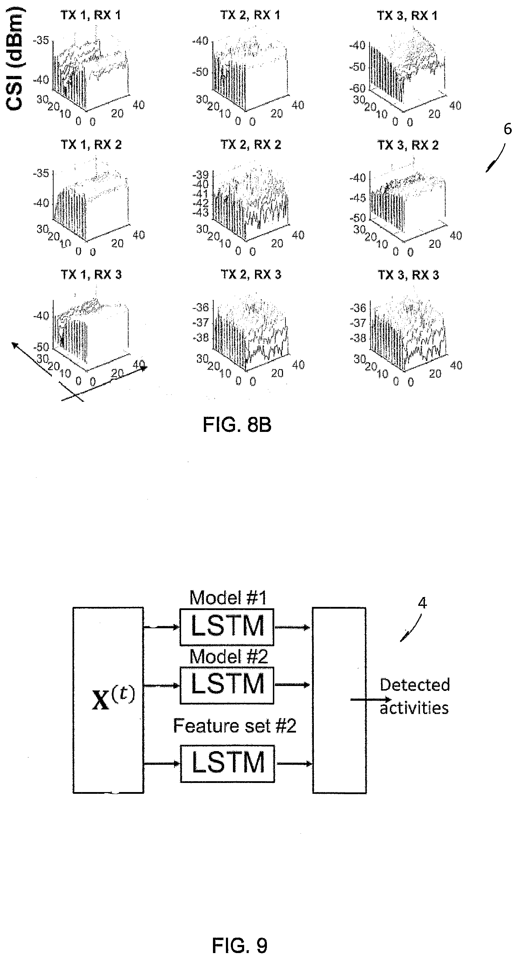

- **Figures 8A** and **8B** schematically illustrate the data structures (tensors) associated with the electromagnetic signal power measures, measured at the subcarriers and at the wave modes, and received by the system shown in Figure 1 in consecutive time instants;

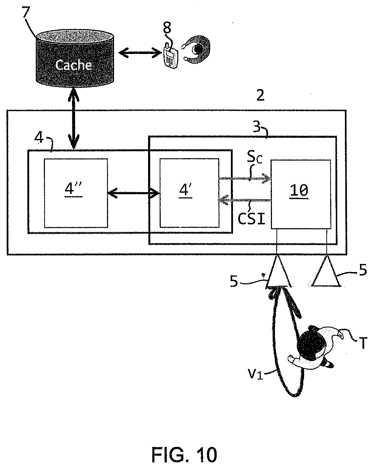

- **Figures 9** and **10** show two block diagrams of the system of Figure 1, wherein the diagram in Figure 9 is suited to provide a schematic representation of the processing of the information associated with the tensors shown in Figure 8, while the diagram in Figure 10 provides a schematic representation of the entire processing of the electromagnetic signals received by the radio modules in order to obtain the information associated with the position/movement of the target (or targets).

Detailed description of the invention

The subject of the present invention is a system, indicated as a whole by the reference number **1**, designed to detect one or more targets **T** (generally moving targets) within a monitored area **A** having predetermined dimensions.

More specifically, the system **1** illustrated in **Figures** from **1** to **10** makes it possible to monitor one or more targets **T** present within an indoor monitored area **A** of domestic and/or industrial type, even if in any case it is understood that said system can be applied also in totally outdoor environments or mixed indoor-outdoor environments.

First of all, the system **1** which is the subject of the present invention comprises at least one pair of electronic devices **2,** each one of which is provided with one or more radio modules **3** suited to transmit and/or receive an electromagnetic signal **S** within the monitored area.

More specifically, each radio module **3** may comprise a modulator or a demodulator, a signal amplifier, mixers, attenuators, filtering means and several antennas in addition to the electronic devices necessary for coding and decoding the electromagnetic signal and for the correct operation of the radio module itself. These components are indicated as a whole by the reference number 10 in the figures.

Generally, the devices **2** are both positioned within the monitored area **A** and the system **1** includes also an electronic processing unit **4** comprising a first electronic portion **4'** and a second electronic portion **4"** operatively connected to each other.

The first electronic portion **4'** is in turn connected to at least one radio module **3** and is designed to process the information associated with the electromagnetic signal **S** transmitted/received by the radio modules **3** in such a way as to extract and process the information coming from the module **3** and related to the status of the transmission channel **C.**

The second electronic portion **4"** of the processing unit **4** will be suited to further process the information provided by the first electronic portion **4'** and related to the status of the transmission channel **C** for the purpose of obtaining data related to the movement and to the instantaneous position of the target (or targets) **T** within the monitored area **A.**

In a first non-claimed configuration of the system **1,** the radio modules **3** of the individual devices 2 can use a single antenna **5** designed to transmit and receive the electromagnetic signal **S** within the monitored area **A.**

According to the invention, at least one radio module **3** associated with a device **2** uses several antennas **5.**

The electromagnetic signal **S** transmitted and received by the antennas **5** within the monitoring environment **A** has electric characteristics that are mainly variable according to two factors: the configuration of the physical space (for example, columns, walls, ceilings, floors, doors, furnishing elements etc.) and the presence of one or more stationary and/or moving targets T.

In the context of the present invention, the term *target* must be understood as any type of object, both animate and inanimate (for example, humans or animals), able to move freely within the space subjected to the monitoring process carried out by the system.

The motion of the target T can thus be both continuous and discontinuous, meaning that the target can alternate time intervals during which it is moving and other time periods during which it is in a stationary position.

The presence of the target **T** and its movement contribute to distorting the characteristics of the electromagnetic signal that propagates within the monitored area.

Therefore, the electric characteristics of the electromagnetic signal **S** received by the antennas **5** contain information associated with the position assumed by the target **T** present within the monitored area **A.**

In the system illustrated in **Figures 1** and **2** there are several receiving radio modules **3** at a given time instant (associated with a plurality of receiving devices) and a single transmitting radio module **3** (associated with a single transmitting device).

All the radio modules **3** illustrated in these figures are provided with at least one antenna **5** suited to transmit/receive the electromagnetic signal **S.** Inside the area **A** subjected to the monitoring process some of these antennas **5** can be transmitting antennas (those of the radio modules **3** used as transmitters) while the remaining antennas **5** can be receiving antennas (those of the radio modules **3** used as receivers).

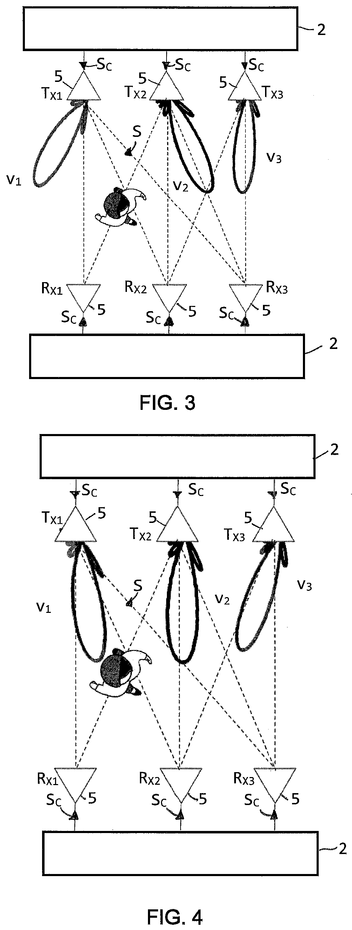

This configuration is described only by way of example, as the **Figures 3** and **4** show the antennas **5** of the radio module **3** associated with a single device **2.**

In this case, the module **3** of the device **2** has three transmitting antennas **5,** while another module **3** associated with another device **2** has three receiving antennas **5** distinct from the transmitting antennas.

In general, therefore, these antennas **5** behave as receiving and/or transmitting antennas.

The radio modules **3,** associated with the devices **2,** comprise N antennas (for example, N = 2 in the examples of **Figure 1** and Figure 2, N = 3 in the examples of **Figure 3** and **Figure 4**) and the corresponding electronic unit **4** establishes how many and which of them are used as transmitting antennas ($N_{TX}$ = 2 for a radio module **3** in the example of **Figure 1** and **Figure 2,** $N_{TX}$ = 3 for a radio module **3** in the example of **Figure 3** and **Figure 4**) and/or as receiving antennas ($N_{RX}$ = 1 in the example of **Figure 1** and **Figure 2,** $N_{RX}$ = 3 in the example of **Figure 3** and **Figure 4**), and consequently what antennas **5** are used to transmit and/or receive the corresponding electric signals generated and/or received.

In other words, the first portion **4'** of the electronic unit **4** selects in real time one or more antennas **5** to transmit and/or receive the corresponding electromagnetic signals S.

The processing of the information associated with the transmission channel **C** (obtained from the first electronic portion **4'**) by the second electronic portion **4"** will make it possible to obtain information associated with the movement and the position of the target **T** within the environment **A;** thanks to said information, the system will thus be able to assess the behaviour of the target **T** within the monitored area **A** in a completely automatic manner.

Conveniently, the signal emitted in the monitored area **A** will be included in the radio frequency band, in such a way as to allow the transmission and the reception of numerical data associated, for example, with the communications networks and with Internet traffic.

More specifically, the electromagnetic signal **S** can be selected in such a way as to meet the standards and the Wi-Fi communication protocols required by the IEEE 802.11 technology or in such a way as to comply with the Bluetooth protocols, including future WLAN (wireless local area network) protocols, WPAN (wireless personal area network) protocols and WWAN (wireless wide area network) protocols.

Therefore, the system 1 may comprise devices **2** designed to promote the transmission and reception of an electromagnetic signal **S** of the Wi-Fi type suited to comply with the IEEE 802.11 b, g, n, ac, ax, ad protocols (and their successive upgrades), most of which are centred (at least) on the frequency interval $f_W$ included between 2 GHz and 7 GHz and that in the neighbourhood of 60 GHz.

As is known, the standards associated with this type of transmission require that the transmission band be divided into a plurality of channels, each having a respective subcarrier and an overall band width generally included between 20 MHz and 160 MHz (2.16 GHz for protocol IEEE 802.11ad).

The system **1** illustrated in **Figures** from **1** to **10** uses this type of electromagnetic signals **S,** however further configurations of the system not represented in the figures may allow the transmission and reception of generic signals and not exclusively of Wi-Fi signals.

For example, the devices **2** used in the system **1** which is the subject of the present invention can be configured to promote the transmission and reception of electromagnetic signals **S** included between 0.7 GHz and 71 GHz and, preferably, included between 2 GHz and 8 GHz.

Conveniently, each radio module **3** has a respective set of predetermined electric parameters **P** associated with the operation of the components **10** of the radio modules and of one or more antennas **5** associated with them.

This set of parameters **P** is suited to define a respective wave mode of the electromagnetic signal or signals **S** emitted and received by the antennas **5** of the corresponding radio modules **3**.

As is better specified below, the expression *wave mode* used in this description indicates a precise and specific electric configuration of the electromagnetic signal during its propagation from the transmitting antenna to the receiving antenna.

For example, the set defining a wave mode may comprise a selection of parameters **P** suited to define, for the electromagnetic signal **S,** a given radiation pattern and/or a given polarization of the same or a specific configuration of the parameters of the antenna or antennas **5**.

In substance, the determination of a precise set of electric parameters **P** associated with the electromagnetic signal **S** (for example, amplitude, phase, polarization etc.) defines a specific wave mode $v_x$ and therefore distinct sets of parameters P define corresponding wave modes $v_1$, $v_2$, ... (different from one another).

The electronic processing unit **4** is configured to selectively transmit a control signal $s_C$ to the radio modules **3** of the devices **2**.

This control signal $s_C$ will be suited to vary the parameters **P** of the respective radio modules **3** in such a way as to promote the selective emission by the antenna (or antennas) **5** associated with the same modules **3** of an electromagnetic signal **S** with which a given wave mode $v_X$ is associated.

Preferably, the control signal $s_C$ will be generated by the first electronic portion **4'** and its electric characteristics will be such as to promote the modification of the wave mode $v_X$ of the corresponding electromagnetic signal **S** transmitted and/or received by one or more antennas **5** of the modules **3** through an adaptation and/or modification of the radiation pattern and/or of the polarization and/or of the power and/or of the band and/or of the frequency of the corresponding radio module.

In order to define the various wave modes $v_X$ it is possible to use also the parameters associated with the antennas **5** used in the radio modules **3**.

More specifically, it is possible to use the so-called *S* parameters (*scattering parameters*) of the antenna and in particular it is possible to conveniently modify the reflection coefficient and/or the transmission coefficient of the antennas **5** as well as other electric characteristics specific to the antennas themselves.

The set of all the parameters **P** mentioned above can thus define a given wave mode $v_X$ for the electromagnetic signal **S.**

For example, a precise wave mode $v_X$ can be defined by properly setting the radiation pattern, the polarization, the frequency and, if necessary, the transmission and reflection coefficients of the antenna (or antennas) associated with the transmitted electromagnetic signal **S.**

The wave mode $v_X$ can thus be modified, for example by using radio modules **3** capable of dynamically modifying the radiation pattern and/or the polarization of the electromagnetic field **S**. This can be obtained through the use of a single radiating element provided with integrated switches and/or capacities and inductances or through the supply to several radiating elements operatively connected to one another by means of further switches and/or through variable phase shifters.

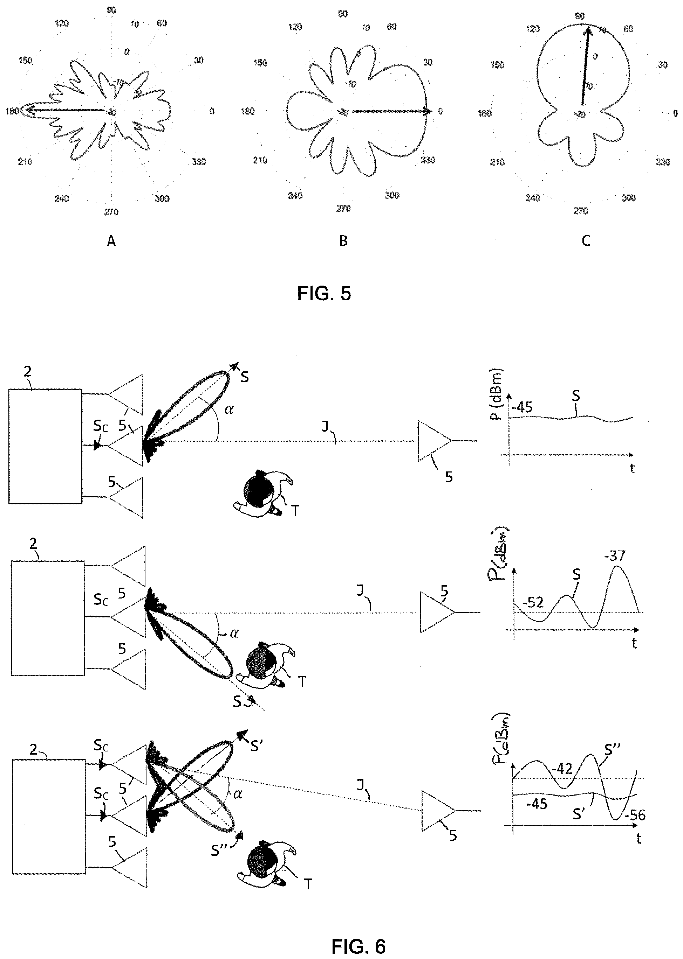

For example, **Figure 5** shows three different radiation patterns (A, B and C) in the azimuth plane, associated with a single, vertically polarized antenna **5** suited to emit an electromagnetic signal with frequency equal to 2.45 GHz.

Each diagram shown in **Figure 5** identifies a different wave mode $v_X$ of the antenna **5** obtained by conveniently reconfiguring the electric parameters of the latter through the emission of the control signal $s_C$.

In other words, the emission of the control signal $s_C$ will make it possible to vary the electric parameters associated with the antenna **5** in such a way as to promote the propagation of the electromagnetic signal **S** according to a different radiation pattern.

Therefore, the radiation pattern shown on the left in **Figure 5** will be associated with a precise wave mode (for example, $v_1$), while the radiation pattern shown at the centre in **Figure 5** will be associated with a different wave mode (for example, $v_2$) and the radiation pattern shown on the right in **Figure 5** will be associated with a further wave mode, different from the first two wave modes (for example, $v_3$).

These different wave modes ($v_1$, $v_2$, $v_3$) are emitted by the same antenna **5** due to the effect of the emission of the control signal $s_C$.

In the same figures, beside the radiation patterns, there are also arrows indicating the direction of maximum radiation of the antenna **5** corresponding to the three wave modes $v_1$, $v_2$ and $v_3$.

Conveniently, the control signal $s_C$ generated by the electronic unit 4 will be suited to promote the selection of respective sets of parameters **P** in turn suited to promote a finite and predetermined set **N** of wave modes associated with the electromagnetic signal **S** received and/or transmitted by the antenna (or antennas) **5** associated with the radio module

3.

The special configuration of this system **1** makes it possible to emit and receive an electromagnetic signal **S** associated with a plurality of wave modes $v_x$ that vary over time.

The antennas **5** of the radio modules **3** used in that time instant as receivers have electric and/or geometric characteristics suited to allow the use of a part only of all of the wave modes $v_x$ associated with the electromagnetic signal S.

More specifically, some antennas **5** are configured to receive electromagnetic signals **S** having wave modes $v_x$ included in a first subset N' of the finite set N of wave modes included in the system (N' < N) and for each module there are other antennas **5** suited to receive signals having wave modes included in a second subset N" of the finite set N (N" < N).

The antennas **5** of the module used by the corresponding device **2**, if taken globally, can transmit and receive electromagnetic signals **S** with which all the wave modes $v_x$ of the finite set N are associated; however, the electronic unit **4** can be configured to promote, through the control signal $s_C$, the processing of only those electromagnetic signals **S** which are associated with a corresponding subset N" of wave modes (N" < N).

The control signal $s_C$ can be configured to promote the selective emission of an electromagnetic signal **S** associated with a number of wave modes N''' that is smaller than the number N of the finite set used by the system 1.

In other words, the electronic unit **4** can be designed to generate a control signal $s_C$ capable of promoting the emission and the reception of an electromagnetic signal associated with a given number of wave modes $v_x$ which can be varied with extreme flexibility in order to adapt to the particular operating conditions required by a specific type of application.

The electronic unit 4 will thus be able to dynamically promote the selective emission of an electromagnetic signal S associated with all the wave modes $v_x$ included in the system 1 or with a subset of the same wave modes.

Even the reception of the electromagnetic signal by the respective device **2** can be managed dynamically by the electronic unit **4** (more specifically, by the first portion **4'** of the same) in such a way as to promote the processing of all the wave modes $v_x$ previously transmitted and/or received or of a part of said wave modes.

As is described in greater detail below, the processing, by the corresponding electronic unit **4,** of the electromagnetic signals **S** associated with a plurality of wave modes $v_x$ makes it possible to obtain particularly precise and reliable information related to the instantaneous position of the target **T** within the monitored area **A.**

In a first non-claimed configuration of the invention, shown in the diagram of Figure **2**, a single antenna **5** of the radio module **3** associated with the first device **2** is used in such a way as to selectively transmit an electromagnetic signal **S** with which the respective wave modes $v_x$ are associated.

The control signal $s_C$ may have predetermined electric characteristics suited to allow the parameters **P** associated with each set to be maintained for a predetermined time interval.

More specifically, the control signal $s_C$ can be suited to vary the sets of parameters **P** in one or more radio modules **3** in a cyclic manner, so as to promote the transmission and/or the reception by the same of an electromagnetic signal **S** with which a cyclic sequence of wave modes $v_x$ is associated.

The duration of each set of parameters **P,** furthermore, can be substantially constant for each repetition cycle or, alternatively, the sequence of parameters **P** may not be cyclic and follow a non-repetitive pattern developing according to random or pseudorandom logic.

However, the electronic processing unit **4** can be configured to generate a control signal $s_C$ suited to apply, with respect to wave modes $v_x$ associated with the transmitted/received electromagnetic signal **S,** the criterion of time division with a substantially constant duration of repetition of the single mode (which can be the same for all modes or different).

For example, if the set of wave modes is equal to three (N = 3) and the electromagnetic signals **S** associated with these modes are indicated by $S_1$, $S_2$, $S_3$, the cyclic sequence of supply to the antenna **5** can be represented as follows:

$$[ (S_1, \Delta_1, v_1); (S_2, \Delta_2, v_2); (S_3, \Delta_3, v_3); (S_1, \Delta_1, v_1); (S_2, \Delta_2, v_2); (S_3, \Delta_3, v_3) \ldots]$$

where the symbols $(\Delta_1, \Delta_2, \Delta_3)$ indicate the duration of each wave mode.

Generalizing the example above and considering a control signal $s_C$ suited to promote the transmission and reception of an electromagnetic signal **S** with which N wave modes $v_x$ are associated, the cyclic supply sequence can thus be represented by a generic permutation:

$$[ (S_1, \Delta_1, v_1) \ldots (S_N, \Delta_N, v_N); (S_1, \Delta_1, v_1) \ldots (S_N, \Delta_N, v_N); \ldots]$$

In the system 1 shown in **Figures 3** and **4,** there are several radio modules **3,** each of which is provided with several antennas **5,** and an electronic unit **4** designed to promote the selective supply to only one antenna **5** at a time for the purpose of generating further wave modes $v_x$ with a respective control signal $s_C$.

**Figures** from **7A** to **7C** show an example of a system 1 suited to monitor an area of an indoor environment **A** formed by a plurality of rooms delimited and separated by means of partitions.

In this case, the system 1 comprises a first device **2** with one pair of transmitting/receiving antennas **5** placed at the level of an internal partition of the environment **A** and a second device **2,** also provided with one pair of transmitting/receiving antennas **5** placed at the level of a wall at the end of the same environment **A.**

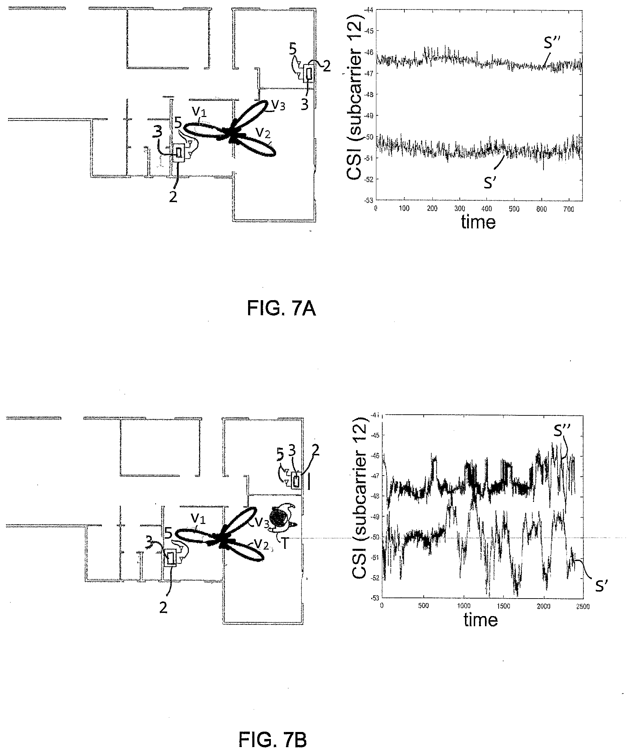

The diagram shown on the right in **Figures 7A** - **7C** shows the trend over time of the power, expressed in dBm, of the electromagnetic signal **S** received by the first device, and relative to the 12th subcarrier of a Wi-Fi signal of the type indicated by standard IEEE 802.11n.

Two distinct wave modes are associated with said signal **S** and, in particular, the upper signal **S'** represents the trend over time of the received power associated with the first wave mode, while the lower signal **S"** represents the trend over time associated with the second wave mode.

These signals, like all the others received by the receiving antenna **5** of the radio module **3** of the first device **2,** contain information on the physical space within which said signals propagated. This information is generally indicated by the acronym CSI (*Channel State Information*).

More specifically, the processing of the electromagnetic signals **S** received by the antennas **5** of the modules **3** (and with which the respective wave modes $v_X$ are associated), will allow the first portion of the electronic unit **4** to extract from the radio modules **3** a plurality of information which constitutes the CSI database of that particular environment **A** at a given time instant.

In the example of **Figure 7A,** the information that the electronic unit **4** can obtain from the CSI database concerns a substantially "empty" environment, meaning an environment **A** without targets **T** (both stationary and moving) located inside it.

**Figure 7B** represents a different situation, as inside the monitored area **A** there is now a target **T** positioned in proximity to the receiving antennas **5** of the second device 2, while in **Figure 7C** said target T has slightly moved towards the room adjacent to that in which it was before.

As can be observed from the trends represented on the right in the figures, the presence of a target **T** within the environment **A** and its successive movement distort the electromagnetic signal **S** (in this regard, see the different trends of the signals **S'** and **S"** over time), and these distortions, each associated with its own wave mode, can be detected and processed by the first portion **4'** of the electronic unit **4.**

Following said processing operation, the electronic unit **4** will make it possible to obtain a different CSI measure of the environment (if compared, for example, with that detected in **Figure 7A**) and these differences, conveniently processed by the second electronic portion **4",** will allow the system **1** to determine the initial position and the movement of the target **T** within the monitored area **A.**

The use of a plurality of wave modes $v_X$ associated with the electromagnetic signal **S** transmitted and received within the monitored area **A** makes it possible to increase the information associated with the CSI database and this considerably improves the precision with which it is possible to assess the behaviour of the target **T.**

More specifically, irradiating the environment **A** (and the target **T**) with electromagnetic signals **S** associated with a plurality of wave modes $v_X$, it is possible to obtain more precise information related to the CSI database; this information is obtained by processing the "combination" of the received information associated with the transmission of the various previously transmitted wave modes. Each wave mode, in fact, makes it possible to obtain "further new" information associated with the status of the environment **A** of the target **T.**

A further example of operation of the system which is the subject of the present invention is shown in **Figure 6.**

In this case, the electronic unit **2** is connected to three transmitting antennas **5** and is suited to vary the characteristics of the electric control signal $s_c$ in such a way as to promote the selective emission of an electromagnetic signal **S** through each one of said antennas **5** .

The radio frequency signal **S** transmitted by the system of **Figure 6** is defined in the band corresponding to a centre frequency f=5.32 GHz (for example, the signal transmitted by this system can come from a Wi-Fi Access Point).

As shown in the image at the top in **Figure 6,** it is possible to suppose that at a given time instant the control signal $s_c$ applied to the centre antenna **5** is such as to promote the emission of an electromagnetic signal **S** having a maximum radiation direction suited to approximatively form an angle $\alpha$ = 45°with respect to the straight line **J** that joins the antenna **5** of the electronic unit **2** with the receiving antenna **5** (line of sight).

At the receiving antenna **5** it will be possible to detect a power trend which is visible in the diagram on the right in the figure.

This diagram shows the trend over time of the power of the signal received by the antenna (receiver).

In this case, the power is approximately constant over time and equal to approximately - 45 dBm (decibel relative to the reference power of 1 mW), as the wave mode $v_x$ selected following the application of the control signal $s_c$ is associated with a specific electromagnetic signal **S** which is affected to a negligible extent by the effects of the movement of the target **T** (positioned at the bottom).

Consequently, the electric signal generated by the receiving antenna **5** will not be affected by the effects of the movement of the target **T,** either.

The image at the centre in **Figure 6** shows a different operating condition of the system, meaning that in this case the control signal $s_c$ has been updated so as to vary the wave mode $v_x$ associated with the centre antenna and thus transmit an electromagnetic signal **S** suited to orient its maximum radiation direction in such a way as to approximatively form an angle $\alpha = 45°$ with respect to the *line of sight.*

In this case, since the maximum radiation direction of the electromagnetic signal **S** approximately coincides with the position and the direction of movement of the target T, the electric signal obtained as an output of the receiving antenna **5** is considerably affected by the presence of the target T and by the movements performed by the latter.

As can be seen in the diagram on the right, compared to the previous case the power of the received signal is subjected to significant distortion, fluctuating between approximately -37dBm and approximately -56dBm and settling on an average value of approximately -52 dBm.

In this operating configuration of the system, there is an average attenuation which is approximately 7 dB higher than in the previous case.

Thus, by combining the application of the wave modes $v_x$ used in the examples of operation described above (top and centre image in **Figure 6**) to the different antennas **5** connected to the electronic unit **2,** it is possible to acquire a wide range of numerical data which vary according to the powers received by each transmitting antenna and associated with each single antenna mode $v_x$. By conveniently processing said data it is possible to extract information associated with the movement and the position of the target over time.

As a further example, in the bottom image in **Figure 6** the electronic unit **2** sends two distinct control signals $s_c$ to the upper antenna and the centre antenna.

More specifically, the wave mode $v_x$ applied to the upper antenna **5** is suited to promote the transmission of an electromagnetic signal **S"** whose maximum radiation direction is oriented so as to approximatively form an angle $\alpha = 30°$ with respect to the *line of sight,* while the wave mode $v_x$ applied to the centre antenna **5** is suited to promote the transmission of an electromagnetic signal **S'** approximatively equal to the electromagnetic signal **S** illustrated in the first case.

At the receiving antenna **5** it will be possible to determine the diagram visible on the right in the figure, where the lower line is associated with the signal transmitted by the centre antenna while the upper line refers to the signal transmitted by the upper antenna.

The combined analysis of both the signals visible in said diagram will make it possible to detect the presence and the movement of the target T and its relative position with respect to the electronic control unit **2.**

Therefore, by conveniently varying the wave mode $v_x$ associated with the antenna/antennas **5,** it is possible to modify the radiation pattern (and thus the direction and amplitude of maximum radiation), the polarization and the scattering parameters of the same antennas **5.**

The use of the wave modes $v_x$ described above thus makes it possible to acquire several electromagnetic signals containing information on the spatial configuration of the environment and of the targets **T** and, through a successive processing cycle, to combine said signals with one another on reception in such a way as to obtain more reliable data on the position and the activity of the targets **T.**

In a manner known per se, as an alternative to the CSI database, it is possible to assess the status of the transmission channel **C** even through the measurement of the received power (RSS - *Received Signal Strenght*).

As already mentioned above, the assessment of the transmission channel **C** is carried out by the radio module **3.**

In the case where a device **2** is made up of several radio modules **3,** the first electronic portions **4'** can be coordinated by the same second electronic portion **4"** for the purpose of generating specific sets of parameters **P** for the radio modules of the device **2,** in such a way as to use the wave modes $v_x$ jointly and in a coordinated manner for the same device **2.**

Furthermore, the second portions **4"** of the electronic units **4** associated with radio modules **3** of different devices **2** can jointly coordinate the operation of the first portions **4',** for example by exchanging information through connections via the local network and/or the Internet, in such a way as to generate specific sets of parameters **P** for the radio modules **3** of different devices **2** for the purpose of using the wave modes $v_x$ jointly and in a coordinated manner for these distinct devices **2.**

In order to track the position of the target T, the known systems which employ the electromagnetic field propagated in the monitoring environment **A** as a detection means mainly use three dimensions in their processing algorithms: the time and/or time interval when the signal **S** has been detected, the information related to the RSS measurements of the power of the received signal, or further information on the status of the radio channel, and the type of propagation associated with the environment where the transmitting antennas and the receiving antennas are positioned.

As can be better seen in the tables shown in **Figures 8A** and **8B,** in the case of the system 1 which is the subject of the present invention, it is possible to introduce in the processing cycle a further variable associated with the spatial dimension detected (or "scanned") by a plurality of electromagnetic signals **S,** each one of which is associated with respective wave modes $v_x$.

In the case at hand, it is therefore possible to detect the status of the target **T** by processing four variables: the time and/or time interval when the signal **S** has been detected, the power of the wireless signal received and/or other information on the status of the wireless channel, the type of propagation associated with the environment where the transmitting antennas and the receiving antennas are positioned and the information associated with the physical space and corresponding to a specific wave mode $v_x$.

Starting from the knowledge of the measures associated with the transmitting radio module **3** and the receiving radio module **3**, it is possible to define mathematical tensors, indicated as a whole by the reference number **6**, in which each element is represented by the trend of the variation over time of the signal power in dBm of the electromagnetic signal **S** received by the corresponding antennas **5** of the modules **3** and associated with the subcarriers/channels; said trend takes implicitly into account also the type of radio propagation environment in which the transmitting antenna and the receiving antenna are positioned.

The introduction of a plurality of antenna modes $v_x$ makes it possible to replicate the cells of these tensors **6** since, as better indicated in **Figures 8A** and **8B,** each element is associated with that specific series of wave modes emitted in a given time interval $\Delta_x$.

In the successive time intervals $\Delta_{x+1}$ ... $\Delta_{x+N}$ the system will be suited to detect further tensors **6** formed by respective sets of these four variables.

As already described above, this substantially four-dimensional numerical analysis considerably increases the information related to the CSI database that can be processed by the electronic unit **4**.

For this purpose, and as can be better seen in **Figure 9,** the second electronic portion **4"** can be programmed with a series of instructions suited to sequentially process the sets of the above-mentioned variables contained in each tensor **6** (and graphically illustrated in **Figures 8A** and **8B**).

From the physical-constructive point of view, the electronic unit **4** will be able to convert the reception analog electric signal present at the output of the receiving antennas **5** of the radio modules **3** into a digital signal which will be successively processed according to an algorithm which takes into account the four variables mentioned above and the mathematical tensors **6** associated with the same.

More specifically, indicating with $X^{(t)}$ the tensor detected at a certain time instant t and/or during the time interval t, t+ $\Delta_t$, the processing algorithm used by the corresponding electronic unit **4** to detect the movement of the target **T** starting from the CSI database will be suited to process the series of tensors **6** which are generated over time, following the reception of the electromagnetic signal **S** emitted by a device **2** within the monitored area **A.**

This processing operation can be carried out with the known calculation techniques using the so-called *machine learning* algorithms on the sequence $X^{(t)} X^{(t+1)} X^{(t+2)} ... X^{(t+T)}$ (for example through LSTM - *Long-Short Term Memory Network* techniques) combined according to convenient predetermined models (for example, stacking, bagging, boosting, etc).

In this type of algorithms, furthermore, the known motion detection techniques are also reproduced, which are suited to use multiple levels of linear/non- linear transforms applied to the characteristics of the CSI databases.

**Figure 10** shows a block diagram of the entire system **1** in which, in addition to the plurality of radio modules **3** and to the electronic control unit **4,** there is also a database **7** (which can be of local type or of remote type, meaning, for example, in *cloud*) suited to store the intermediate data **D** generated as an output by the electronic unit **4** following the processing of the status of the respective transmission channel.

Said data can be accessed by means of an application (or App) installed in a fixed and/or mobile device **8** (for example, a *computer, tablet, smartphone* etc.) which allows the user to access, even from a remote location, the intermediate information **D** stored in the database **9** and associated with the instantaneous position of one or more targets **T** present within the monitored area **A.**

According to a further non-claimed aspect of the present invention, the subject of the same includes a method for detecting one or more targets T positioned within a monitored area, which comprises a step **a)** of preparation of at least one pair of electronic devices **2** and a step **b)** of preparation of one or more radio modules **3** associated with said devices **2.**

There is also a step **c)** of transmission and reception of an electromagnetic signal S by said one or more radio modules **3.**

The method includes also a step **d)** of preparation of an electronic unit **4** having a first electronic portion **4'** and a second electronic portion **4"** mutually connected to each other; following said step **d)** there is a step **e)** of connection of said first electronic portion **4'** with at least one radio module **3** of the devices **2.**

During step **f),** the first electronic portion **4'** processes the information associated with the electromagnetic signal **S** in such a way as to extract and process some characteristic data related to the status of the transmission channel **C.**

Successively, the method includes a step **g),** during which the second electronic portion **4"** process the characteristic data processed by the first electronic portion **4'** and associated with the status of the transmission channel **C** in order to obtain data related to the movement and the instantaneous position of one or more targets T within the monitored area.

According to a peculiar aspect of the method, the same includes also a step **h),** during which the electronic processing unit **4** (and more specifically the first portion **4'** of the latter) generates a control signal $s_C$ which is selectively sent to one or more radio modules **3.**

The control signal s$_C$ is suited to vary the parameters **P** associated with said one or more radio modules **3** in order to promote, during step **c),** the selective emission and/or reception by the same module **3** of an electromagnetic signal **S** corresponding to a specific wave mode **v$_X$.**

During said step **h),** it is possible to activate also an operating mode for the second portion **4"** of the electronic processing unit **4** of one or more radio modules **3** of the same device **2** in order to coordinate the operation of the first electronic portions **4'** and generate specific sets of parameters **P** for the radio modules **3** associated with the same device **2,** in such a way as to generate the wave modes for said distinct radio modules **3** of the same device **2** jointly and in a coordinated manner.

Furthermore, step **h)** can be suited to promote a different operating mode of the second electronic portions **4"** associated with radio modules **3** of different devices **2** in order to coordinate the operation of the first portions **4'** and generate specific sets of parameters **P** related to different radio modules **3** of distinct devices 2, in such a way as to generate the wave modes for the same devices **2** jointly and in a coordinated manner.

The present invention can be carried out in other variants; these technical features can be replaced by other technically equivalent elements and materials; the invention can have any shape and size, provided that they are compatible with its intended use and that the variants fall under the scope of the appended claims.

The reference numbers and signs included in the claims and in the description have the only purpose of making the text easier to understand and must not be considered as elements intended to limit the technical meaning of the objects or the processes they identify.

**Claims**

1. A system for detecting one or more targets (T) located within a monitoring area (A), said system comprising:

   - at least one pair of devices (2), each having one or more radio modules (3) with several antennas (5) designed to transmit/receive an electromagnetic signal (S);
   - at least one electronic processing unit (4) provided with:

      - a first electronic portion (4') associated with one or more of said radio modules (3) and designed to process the information associated with said electromagnetic signal (S) in order to obtain data related to the status of the transmission channel (C);
      - a second electronic portion (4") operatively connected to said first portion (4') and designed to process the information associated with the status of the transmission channel (C) in order to obtain data related to the movement and the instantaneous position of the target (T) within the monitored area (A);

   wherein said electronic processing unit (4) is configured to selectively send a control signal (s$_c$) to at least one of said radio modules (3), said control signal (s$_c$) being suited to vary the parameters (P) associated with said one or more radio modules (3) to promote the selective emission and/or reception by the same of an electromagnetic signal (S) corresponding to a predetermined wave mode (v$_x$) so that the wave modes (v$_x$) associated with the electromagnetic signal (S) vary over time;
   wherein the first portion (4') of the electronic unit (4) is suited to select in real time one or more antennas (5) of said one or more radio modules (3) to transmit and/or receive the corresponding electromagnetic signals (S);
   **characterised in that** some of the antennas (5) of the radio modules (3) used as receivers have electric and/or geometric characteristics configured to receive a first subset of the set of wave modes (v$_x$) supported by the system, and **in that** other antennas (5) of the radio modules (3) used as receivers have electric and/or geometric characteristics configured to receive a second subset of the set of wave modes (v$_x$) supported by the system.

2. System as claimed in claim 1, **characterized in that** said control signal (s$_c$) is designed to selectively vary the parameters (P) associated with the radiation pattern and/or the reflection coefficient and/or the transmission coefficient and/or the polarization of at least one antenna (5) associated with said one or more radio modules (3), and/or with the power and/or the band and/or the frequency of said electromagnetic signal (S).

3. System as claimed in claim 1 or 2, **characterized in that** each radio module (3) comprises one or more modulators or demodulators, signal amplifiers, mixers, attenuators, filtering devices and one or more antennas.

4. System as claimed in claim 2 or 3, **characterized in that** said control signal (s$_c$) is designed to selectively and simultaneously vary the parameters (P) of said one or more radio modules (3) in order to define respective sets of parameters (P), each corresponding to a respective wave mode ($v_x$) associated with the electromagnetic signal (S).

5. System as claimed in one or more of the preceding claims, **characterized in that** said control signal ($s_c$) is designed to maintain the parameters (P) of each set constant for a predetermined time interval.

6. System as claimed in claim 5, **characterized in that** said control signal ($s_c$) is designed to vary the sets of parameters (P) of one or more radio modules (3) in a cyclic manner, so as to promote the emission and/or reception by the same of an electromagnetic signal (S) with which a cyclic sequence of wave modes ($v_x$) is associated.

7. System as claimed in claim 6, **characterized in that** said control signal ($s_c$) is designed to maintain the time duration of each set of parameters (P) of one or more radio modules (3) substantially constant for each repetition cycle.

8. System as claimed in claim 5, **characterized in that** said control signal ($s_c$) is designed to vary the sets of parameters (P) of one or more radio modules (3) according to a predetermined pattern.

9. System as claimed in one or more of the preceding claims, **characterized in that** said control signal ($s_c$) is generated by said first electronic portion (4') of said electronic processing unit (4).

10. System as claimed in one or more of the preceding claims, **characterized in that** said first electronic portion (4') of said electronic processing unit (4) is integrated within said at least one device (2) of said at least one pair.

11. System as claimed in claim 10, **characterized in that** said second electronic portion (4") of said electronic processing unit (4) is integrated within said at least one device (2) of said at least one pair.

12. System as claimed in any of the claims from 1 to 10, **characterized in that** said second electronic portion (4") of said electronic processing unit (4) is remote and operatively connected to said first electronic portion (4') through the local network and/or through the Internet.

13. System as claimed in claim 1, **characterized in that** said electromagnetic signal (S) has a frequency included between 0.7 GHz and 71 GHz, and preferably included between 2 GHz and 8 GHz.


**Patentansprüche**

1. System zum Erfassen eines oder mehrerer Ziele (T), die sich innerhalb eines Überwachungsbereichs (A) befinden, wobei das besagte System Folgendes umfasst:

- mindestens ein Paar von Vorrichtungen (2), wobei jede Vorrichtung ein oder mehrere Funkmodule (3) mit mehreren Antennen (5) aufweist, die dazu ausgelegt sind, ein elektromagnetisches Signal (S) zu übertragen/empfangen;
- mindestens eine elektronische Verarbeitungseinheit (4), die mit Folgendem versehen ist:

- einem ersten elektronischen Abschnitt (4'), der einem oder mehreren der besagten Funkmodule (3) zugeordnet ist und dazu ausgelegt ist, die dem besagten elektromagnetischen Signal (S) zugeordneten Informationen zu verarbeiten, um Daten in Bezug auf den Status des Übertragungskanals (C) zu erhalten;
- einem zweiten elektronischen Abschnitt (4"), der operativ mit dem besagten ersten Abschnitt (4') verbunden ist und dazu ausgelegt ist, die dem Status des Übertragungskanals (C) zugeordneten Informationen zu verarbeiten, um Daten in Bezug auf die Bewegung und die momentane Position des Ziels (T) innerhalb des überwachten Bereichs (A) zu erhalten;

wobei die besagte elektronische Verarbeitungseinheit (4) dazu konfiguriert ist, selektiv ein Steuersignal ($s_c$) an mindestens eines der besagten Funkmodule (3) zu senden, wobei das besagte Steuersignal ($s_c$) dazu geeignet ist, die Parameter (P), die dem besagten einen Funkmodul oder den besagten mehreren Funkmodulen (3) zugeordnet sind, zu variieren, um die selektive Aussendung und/oder den selektiven Empfang eines elektromagnetischen Signals (S), das einem vorbestimmten Wellenmodus ($v_x$) entspricht, durch diese zu fördern, sodass die Wellenmodi ($v_x$), die dem elektromagnetischen Signal (S) zugeordnet sind, im Laufe der Zeit variieren; wobei der erste Abschnitt (4') der elektronischen Einheit (4) dazu geeignet ist, in Echtzeit eine oder mehrere Antennen (5) des besagten einen Funkmodul oder der besagten mehreren Funkmodule (3) auszuwählen, um die entsprechenden elektromagnetischen Signale (S) zu übertragen und/oder zu empfangen;
**dadurch gekennzeichnet, dass** einige der Antennen (5) der Funkmodule (3), die als Empfänger verwendet werden, elektrische und/oder geometrische Eigenschaften aufweisen, die konfiguriert sind, um eine erste Untergruppe der Gruppe von Wellenmodi ($v_x$), die vom System unterstützt werden, zu empfangen, und dass andere Antennen (5) der Funkmodule (3), die als Empfänger verwendet werden, elektrische und/oder geometrische Eigenschaften aufweisen, die konfiguriert sind, um eine zweite Untergruppe der Gruppe von Wellenmodi ($v_x$), die vom System unterstützt werden, zu empfangen.

2. System nach Patentanspruch 1, **dadurch gekennzeichnet, dass** das besagte Steuersignal ($s_c$) dazu ausgelegt ist, die Parameter (P) selektiv zu variieren, die dem Strahlungsmuster und/oder dem Reflexionskoeffizienten und/oder dem Übertragungskoeffizienten und/oder der Polarisation mindestens einer Antenne (5), die dem besagten einen Funkmodul oder den besagten mehreren Funkmodulen (3) zugeordnet ist, und/oder der Leistung und/oder dem Band und/oder der Frequenz des besagten elektromagnetischen Signals (S) zugeordnet sind.

3. System nach Patentanspruch 1 oder 2, **dadurch gekennzeichnet, dass** jedes Funkmodul (3) einen oder mehrere Modulatoren oder Demodulatoren, Signalverstärker, Mischer, Dämpfungsglieder, Filtervorrichtungen und eine oder mehrere Antennen umfasst.

4. System nach Patentanspruch 2 oder 3, **dadurch gekennzeichnet, dass** das besagte Steuersignal ($s_c$) dazu ausgelegt ist, die Parameter (P) des besagten einen Funkmodul oder der besagten mehreren Funkmodule (3) selektiv und gleichzeitig zu variieren, um jeweilige Gruppen von Parametern (P) zu definieren, die jeweils einem jeweiligen Wellenmodus ($v_x$), der dem elektromagnetischen Signal (S) zugeordnet ist, entsprechen.

5. System nach einem oder mehreren der vorhergehenden Patentansprüche, **dadurch gekennzeichnet, dass** das besagte Steuersignal ($s_c$) dazu ausgelegt ist, die Parameter (P) jeder Gruppe für ein vorbestimmtes Zeitintervall konstant zu halten.

6. System nach Patentanspruch 5, **dadurch gekennzeichnet, dass** das besagte Steuersignal ($s_c$) dazu ausgelegt ist, die Gruppen von Parametern (P) eines Funkmoduls oder mehrerer Funkmodule (3) auf zyklische Weise zu variieren, um die Aussendung und/oder den Empfang eines elektromagnetischen Signals (S), dem eine zyklische Folge von Wellenmodi ($v_x$) zugeordnet ist, durch diese zu fördern.

7. System nach Patentanspruch 6, **dadurch gekennzeichnet, dass** das besagte Steuersignal ($s_c$) dazu ausgelegt ist, die Zeitdauer jeder Gruppe von Parametern (P) eines Funkmoduls oder mehrerer Funkmodule (3) für jeden Wiederholungszyklus im Wesentlichen konstant zu halten.

8. System nach Patentanspruch 5, **dadurch gekennzeichnet, dass** das besagte Steuersignal ($s_c$) dazu ausgelegt ist, die Gruppe von Parametern (P) eines Funkmoduls oder mehrerer Funkmodule (3) gemäß einem vorbestimmten Muster zu variieren.

9. System nach einem oder mehreren der vorhergehenden Patentansprüche, **dadurch gekennzeichnet, dass** das besagte Steuersignal ($s_c$) vom besagten ersten elektronischen Abschnitt (4') der besagten elektronischen Verarbeitungseinheit (4) erzeugt wird.

10. System nach einem oder mehreren der vorhergehenden Patentansprüche, **dadurch gekennzeichnet, dass** der besagte erste elektronische Abschnitt (4') der besagten elektronischen Verarbeitungseinheit (4) in die besagte mindestens eine Vorrichtung (2) des besagten mindestens einen Paars integriert ist.

11. System nach Patentanspruch 10, **dadurch gekennzeichnet, dass** der besagte zweite elektronische Abschnitt (4") der besagten elektronischen Verarbeitungseinheit (4) in die besagte mindestens eine Vorrichtung (2) des besagten mindestens einen Paars integriert ist.

12. System nach jeglichem der Patentansprüche 1 bis 10, **dadurch gekennzeichnet, dass** der besagte zweite elektronische Abschnitt (4") der besagten elektronischen Verarbeitungseinheit (4) entfernt und mit dem besagten ersten elektronischen Abschnitt (4') über das lokale Netzwerk und/oder über das Internet wirkverbunden ist.

13. System nach Patentanspruch 1, **dadurch gekennzeichnet, dass** das besagte elektromagnetische Signal (S) eine Frequenz zwischen 0,7 GHz und 71 GHz und vorzugsweise zwischen 2 GHz und 8 GHz aufweist.

**Revendications**

1.  Système pour la détection d'une ou plusieurs cibles (T) situées dans une zone de surveillance (A), ledit système comprenant :

    - au moins une paire de dispositifs (2) comportant chacun un ou plusieurs modules radio (3) avec plusieurs antennes (5) conçues pour émettre/recevoir un signal électromagnétique (S) ;
    - au moins une unité électronique de traitement (4) dotée de :

        - une première partie électronique (4') associée à un ou plusieurs desdits modules radio (3) et conçue pour traiter les informations associées audit signal électromagnétique (S) afin d'obtenir des données relatives à l'état du canal de transmission (C) ;
        - une deuxième partie électronique (4") connectée de manière opérationnelle à ladite première partie (4') et conçue pour traiter les informations associées à l'état du canal de transmission (C) afin d'obtenir des données relatives au mouvement et à la position instantanée de la cible (T) à l'intérieur de la zone surveillée (A) ;

    où ladite unité électronique de traitement (4) est configurée pour envoyer sélectivement un signal de commande ($s_c$) à au moins un desdits modules radio (3), ledit signal de commande ($s_c$) étant apte à faire varier les paramètres (P) associés auxdits un ou plusieurs modules radio (3) pour favoriser l'émission et/ou la réception sélective par ceux-ci d'un signal électromagnétique (S) correspondant à un mode d'onde prédéterminé ($v_x$) de sorte que les modes d'onde ($v_x$) associés au signal électromagnétique (S) varient au cours du temps ;
    où la première partie (4') de l'unité électronique (4) est apte à sélectionner en temps réel une ou plusieurs antennes (5) desdits un ou plusieurs modules radio (3) pour transmettre et/ou recevoir les signaux électromagnétiques (S) correspondants ;
    **caractérisé en ce que** certaines des antennes (5) des modules radio (3) utilisées comme récepteurs ont des caractéristiques électriques et/ou géométriques configurées pour recevoir un premier sous-ensemble de l'ensemble des modes d'ondes ($v_x$) supportés par le système, et **en ce que** d'autres antennes (5) des modules radio (3) utilisées comme récepteurs ont des caractéristiques électriques et/ou géométriques configurées pour recevoir un deuxième sous-ensemble de l'ensemble des modes d'ondes ($v_x$) supportés par le système.

2.  Système selon la revendication 1, **caractérisé en ce que** ledit signal de commande ($s_c$) est conçu pour faire varier sélectivement les paramètres (P) associés au diagramme de rayonnement et/ou au coefficient de réflexion et/ou au coefficient de transmission et/ou à la polarisation d'au moins une antenne (5) associée auxdits un ou plusieurs modules radio (3), et/ou à la puissance et/ou à la bande et/ou à la fréquence dudit signal électromagnétique (S).

3.  Système selon la revendication 1 ou 2, **caractérisé par le fait que** chaque module radio (3) comprend un ou plusieurs modulateurs ou démodulateurs, amplificateurs de signaux, mélangeurs, atténuateurs, dispositifs de filtrage et une ou plusieurs antennes.

4.  Système selon la revendication 2 ou 3, **caractérisé en ce que** ledit signal de commande ($s_c$) est conçu pour faire varier sélectivement et simultanément les paramètres (P) desdits un ou plusieurs modules radio (3) afin de définir des ensembles respectifs de paramètres (P), chacun correspondant à un mode d'onde respectif ($v_x$) associé au signal électromagnétique (S).

5.  Système selon l'une ou plusieurs des revendications précédentes, **caractérisé en ce que** ledit signal de commande ($s_c$) est conçu pour maintenir les paramètres (P) de chaque ensemble constants pendant un intervalle de temps prédéterminé.

6.  Système selon la revendication 5, **caractérisé en ce que** ledit signal de commande ($s_c$) est conçu pour faire varier les ensembles de paramètres (P) d'un ou plusieurs modules radio (3) de manière cyclique, de manière à favoriser l'émission et/ou la réception par ceux-ci d'un signal électromagnétique (S) auquel est associée une séquence cyclique de modes d'ondes ($v_x$).

7.  Système selon la revendication 6, **caractérisé en ce que** ledit signal de commande ($s_c$) est conçu pour maintenir la durée de chaque ensemble de paramètres (P) d'un ou plusieurs modules radio (3) sensiblement constante pour chaque cycle de répétition.

8. Système selon la revendication 5, **caractérisé en ce que** ledit signal de commande ($s_c$) est conçu pour faire varier les ensembles de paramètres (P) d'un ou plusieurs modules radio (3) selon un schéma prédéterminé.

9. Système selon l'une ou plusieurs des revendications précédentes, **caractérisé en ce que** ledit signal de commande ($s_c$) est généré par ladite première partie électronique (4') de ladite unité électronique de traitement (4).

10. Système selon l'une ou plusieurs des revendications précédentes, **caractérisé en ce que** ladite première partie électronique (4') de ladite unité électronique de traitement (4) est intégrée dans ledit au moins un dispositif (2) de ladite au moins une paire.

11. Système selon la revendication 10, **caractérisé en ce que** ladite deuxième partie électronique (4") de ladite unité électronique de traitement (4) est intégrée dans ledit au moins un dispositif (2) de ladite au moins une paire.

12. Système selon l'une quelconque des revendications 1 à 10, **caractérisé en ce que** ladite deuxième partie électronique (4") de ladite unité électronique de traitement (4) est distante et connectée de manière opérationnelle à ladite première partie électronique (4') par l'intermédiaire du réseau local et/ou de l'Internet.

13. Système selon la revendication 1, **caractérisé en ce que** ledit signal électromagnétique (S) a une fréquence comprise entre 0,7 GHz et 71 GHz, et de préférence comprise entre 2 GHz et 8 GHz.

FIG. 1

FIG. 2

FIG. 3

FIG. 4

FIG. 5

FIG. 6

FIG. 7A

FIG. 7B

**FIG. 7C**

**FIG. 8A**

FIG. 8B

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017210770 A

**Non-patent literature cited in the description**

- Design and Implementation of a CSI-Based Ubiquitous Smoking Detection System. **XIAOLONG ZHENG et al.** IEEE /ACM TRANSACTIONS ON NETWORKING. IEEE / ACM, 01 December 2017, vol. 25, 3781-3793